(19) **Europäisches Patentamt**
**European Patent Office**
**Office européen des brevets**

(11) **EP 3 037 738 B1**

(12) **EUROPEAN PATENT SPECIFICATION**

(45) Date of publication and mention
of the grant of the patent:
**19.06.2019 Bulletin 2019/25**

(51) Int Cl.:
*F24F 5/00* $^{(2006.01)}$     *F24F 11/30* $^{(2018.01)}$
*F24F 11/62* $^{(2018.01)}$     *F24F 11/70* $^{(2018.01)}$
*F24F 11/83* $^{(2018.01)}$     *F24F 110/10* $^{(2018.01)}$
*F24F 3/147* $^{(2006.01)}$

(21) Application number: **15199994.3**

(22) Date of filing: **15.12.2015**

(54) **METHOD OF OPERATION OF A CONDITIONING SYSTEM OF THE FREE COOLING TYPE FOR ENVIRONMENTS AND PARTICULARLY FOR COMPUTING CENTERS**

VERFAHREN ZUM BETRIEB EINES KLIMAANLAGESYSTEMS VOM FREIKÜHLUNGSTYP FÜR UMGEBUNGEN UND INSBESONDERE RECHENZENTREN

PROCÉDÉ DE FONCTIONNEMENT D'UN SYSTÈME DE CONDITIONNEMENT DU TYPE À REFROIDISSEMENT LIBRE POUR ENVIRONNEMENTS ET EN PARTICULIER POUR DES CENTRES DE CALCUL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2014 IT PD20140352**

(43) Date of publication of application:
**29.06.2016 Bulletin 2016/26**

(73) Proprietor: **Vertiv S.R.L.**
**35028 Piove di Sacco (PD) (IT)**

(72) Inventors:
• **VENTURELLI, Tommaso**
**35128 PADOVA (IT)**

• **DALLA MANA, Giuseppe**
**35010 VIGONZA PD (IT)**
• **GATTO, Carlo**
**35020 ARZERGRANDE (IT)**

(74) Representative: **Modiano, Micaela Nadia et al**
**Modiano & Partners**
**Via Meravigli, 16**
**20123 Milano (IT)**

(56) References cited:
**EP-A2- 1 001 228      WO-A1-2014/102821**
**DE-A1-102009 048 543   US-A1- 2008 000 630**
**US-B1- 8 151 578**

EP 3 037 738 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method of operating a conditioning system of the free cooling type for environments and particularly for computing centers.

Conditioning systems of the free cooling type are known today and are widespread, for environments and particularly for computing centers, of the type comprising:

- a conditioning unit of the free cooling type, which in turn comprises an air/air heat exchanger, inside which two air flows exchange heat, a primary air flow, from and toward an environment to be air-conditioned, and a secondary air flow, or process flow, drawn from outside, and an evaporative cooling unit using water for the primary air flow,
- first fans for moving the primary air flow,
- second fans for moving the secondary air flow.

Usually an evaporative conditioning unit, i.e. with cooling means using water, is set up to optimize the overall cost of electricity and water,

On the market, however, such conditioning units are usually set at the factory to start by default with operation using water once the air has reached a certain dry-bulb temperature, therefore irrespective of the outside humidity.

Such setting is performed on the basis of a specific demand for cooling, without taking account of any variations of that demand.

Furthermore, since such default operation setting does not take account of the actual efficacy of the evaporative system at different relative humidity levels for the same outside temperature, this means that before actuating the external fans at maximum speed in dry mode, i.e. without engaging the evaporative means, in order to provide the cooling power required, the unit starts using water anyway in order to obtain an evaporative cooling effect.

US 2008/000630 discloses a ventilator system and method using a heat exchanger to selectively transfer heat between fresh outside air entering and exhaust air leaving an enclosed space whenever energy can be recovered from the exhaust air by doing so. The system uses a microprocessor-based controller which stores one or more profiles indicating the time-varying needs of the enclosed space for heating and cooling. The transfer of heat between the exhaust and fresh air is reduced or eliminated simply by reducing the speed of or stopping the exhaust air handler while the fresh air handler continues to run.

US 8 151 578 B1 discloses a system for cooling computer systems in a room of a data center including a dehumidification system and an air channeling sub-system. The air channeling sub-system includes a mechanical cooling section that removes heat from the cooling air and an evaporative cooling section downstream from the mechanical cooling section. The dehumidification system may be upstream from the mechanical cooling section and the evaporative cooling section. A controller for the cooling system selectively operates the mechanical cooling section and the evaporative cooling section in an adiabatic mode if a first set of control conditions is met and in a hybrid mode if a second set of control conditions is met.

The aim of the present invention is to provide a method of operating a conditioning system of the free cooling type for environments and particularly for computing centers, which is capable of also optimizing consumption based on any variations of the demand for cooling.

In particular, an object of the invention is to provide a method of operating a conditioning system that is capable of evaluating the actual efficacy of the evaporative system at different relative humidity levels for the same outside temperature.

In accordance with the invention, there is provided a method of operating a conditioning system of the free cooling type for environments and particularly for computing centers, as defined in the appended claims.

Further characteristics and advantages of the invention will become better apparent from the detailed description that follows of a preferred, but not exclusive, embodiment of the method of operating a conditioning system according to the invention, which is illustrated for the purposes of non-limiting example in the accompanying drawings wherein;

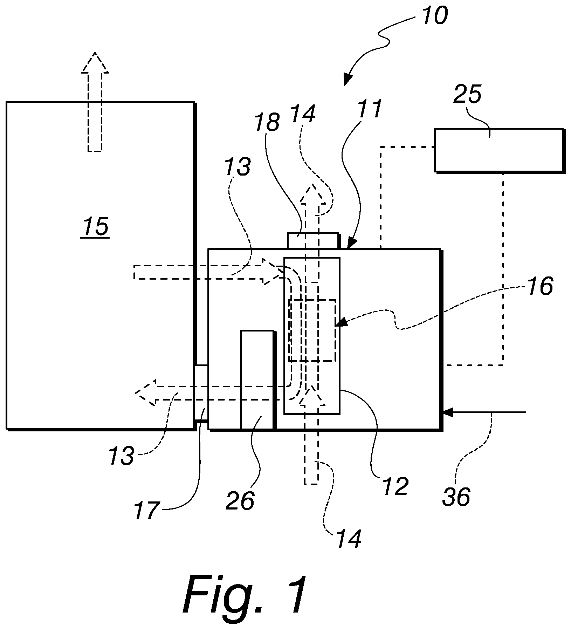

- Figure 1 is a schematic view of a conditioning system operated by the method according to the invention;

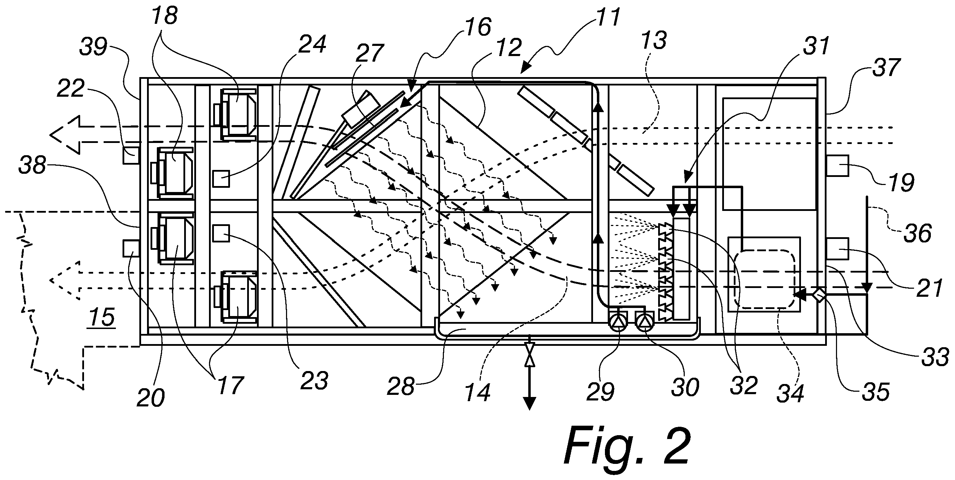

- Figure 2 is a further schematic view of the conditioning system operated by the method according to the invention;
- Figure 3 is a schematic view of the method of operation of the conditioning system according to the invention;
- Figure 4 is a schematic view of the flow of execution of a first part of the method shown schematically in Figure 3;
- Figure 5 is a schematic view of the flow of execution of a second part of the method shown schematically in Figure 3;
- Figure 6 is a schematic view of the flow of execution of a third part of the method shown schematically in Figure 3.

With reference to the figures, a conditioning system of the free cooling type for environments and particularly for computing centers is generally designated with the reference numeral 10.

Such conditioning system 10 comprises:

- a conditioning unit of the free cooling type 11, which in turn comprises an air/air heat exchanger 12, inside which two air flows 13, 14 exchange heat, a primary air flow 13, from and toward an environment to be air-conditioned 15, and a secondary air flow 14, or process flow, drawn from outside, and evaporative cooling means using water 16, better described hereinbelow;
- first fans 17 for moving the primary air flow 13,
- second fans 18 for moving the secondary air flow 14.

The peculiarity of the conditioning system 10 according to the invention consists in that it comprises:

- means 19, 20, 21, 22, described below, for detecting temperature and humidity for the primary air flow 13 and the secondary air flow 14 at the inlet and at the outlet of the conditioning unit 11,
- means 23 and 24, also described below, for detecting the flow-rate of the primary air flow 13 and of the secondary air flow 14,
- an electronic control and management unit 25 adapted to collect and process the data detected by the detection means 19, 20, 21, 22, 23, 24 and, on the basis of such detected data, adapted to determine, on the basis of the outside humidity and temperature values and of the demand for cooling, the operating cost without the use of water and with a variable use of water, and, on the basis of the operating cost, to activate a wet operating mode in which the evaporative cooling means using water 16 are active or a dry operating mode in which the evaporative cooling means using water 16 are inactive.

The conditioning unit 11 is, for example, of the indirect free cooling type, with an air/air exchanger 12.

In a variation of embodiment, the conditioning unit 11 also comprises an auxiliary cooling device 26, which is constituted example by a direct-expansion cooling circuit or constituted by a cooled-water system; it is installed within the conditioning unit 11 in order to provide standby auxiliary cooling power or to supplement the cooling power supplied by the evaporative cooling means using water 16.

The evaporative cooling means 16 comprise, in the present embodiment:

- nozzles 27 for distributing cooling water within the air/air exchanger 12,
- a tank 28 for collecting the water that has not evaporated,
- one or more recirculation pumps 29 and 30 for drawing water from the collection tank 28 and sending it toward the nozzles 27.

In a different embodiment, not shown for the sake of simplicity, the air conditioning unit 11 is of the direct free cooling type; in such case the first fans are arranged in output from an environment to be air-conditioned, and the warm air exits to the outside directly from the environment to be air-conditioned.

The conditioning unit 11, in the embodiment described herein, comprises cooling means using water 31 for the secondary air flow 14 at the inlet of the conditioning unit 11; such cooling means using water 31 may also be absent.

The cooling means using water 31 take the form for example of a series of atomization nozzles 32 which are adapted to atomize water in the primary air flow 13 in the corresponding inlet region 33 of the primary air flow in the conditioning unit 11.

The atomization nozzles 32 are optionally served by a pressurization pump 34 which in turn is preceded by a water filter 35.

The atomization nozzles 32 can be substituted by an adiabatic mat, of conventional type, which performs the same function.

The figures show for the purposes of example a water line 36 for feeding the conditioning unit 11, which can take the form of a pipe of a water mains or a pipe from another water source.

The temperature and humidity detection means for the primary air flow 13 at the inlet of the conditioning unit 11 are constituted by a first probe 19, which is arranged so as to intercept the primary air flow 13, which arrives from the environment to be air-conditioned 15, at an inlet region 37 of the conditioning unit 11.

The temperature and humidity detection means for the primary air flow 13 at the outlet of the conditioning unit 11, i.e. at an outlet region 38 from the unit 11 and at the inlet of the environment to be air-conditioned 15, have a second probe 20.

The means for detecting the temperature and humidity for the secondary air flow 14 at the inlet of the conditioning unit 11 are constituted by a third probe 21, which is arranged so as to intercept the secondary air flow 14, which arrives from the outside environment, in the corresponding inlet region 33 of the conditioning unit 11.

The means for detecting the temperature and humidity for the secondary air flow 14 at the outlet of the conditioning unit 11, i.e. at an outlet region 39 from the unit 11 toward the outside, have a fourth probe 22.

The means for detecting the flow-rate of the primary air flow 13 are constituted by a fifth probe 23, which is arranged in the outlet region 38 from the conditioning unit 11 toward the environment to be air-conditioned 15.

The fifth probe 23 is constituted, for example, by a hot-wire anemometer, or by a differential pressure probe, or by another type of commercially-available anemometer adapted to the range of flow-rate and air considered.

The means for detecting the flow-rate of the secondary air flow 14 are constituted by a sixth probe 24, which is arranged at the outlet region 39 of the secondary air flow 14 from the conditioning unit 11 toward the outside.

Such sixth probe 24 is constituted, for example, by a hot-wire anemometer, or by a differential pressure probe, or by another type of commercially-available anemometer adapted to the range of flow-rate and air considered.

The conditioning system 10 according to the invention, once activated, is capable, by way of the electronic control unit 25 and of the detection means connected thereto, of predictively recalculating what the operating cost will be without the use of water or with a variable use of water; selection of one or the other operating mode is made on the basis of an instant optimization of the costs.

With the variation of the outside humidity and temperature and of the demand for cooling, the electronic unit 25 is capable of re-designating what is the most economic operating mode.

This is as applicable to a system according to the invention of the direct free cooling type as it is to a system according to the invention of the indirect free cooling type.

The invention also relates to a method of operation for a conditioning system 10 according to the invention as described above; the following symbols are used hereinbelow:

Tamb = temperature of the outside air used for the free cooling, measured by the third probe 21;

Hamb = humidity of the outside air used for the free cooling, measured by the third probe 21;

Tsupply = temperature of the primary air flow 13 at the outlet from the conditioning unit 11 and at the inlet to the environment to be air-conditioned 15, measured by the second probe 20;

Hsupply = humidity of the primary air flow 13 at the outlet from the conditioning unit 11 and at the inlet to the environment to be air-conditioned 15, measured by the second probe 20;

Tret = temperature of the primary air flow 13 at the inlet to the conditioning unit 11, i.e. returning from the environment to be air-conditioned 15, measured by the first probe 19;

Hret = humidity of the primary air flow 13 at the inlet to the conditioning unit 11, i.e. returning from the environment to be air-conditioned 15, measured by the first probe 19;

Tex = temperature of the secondary air flow 14 at the outlet from the conditioning unit 11 toward the outside, measured by the fourth probe 22;

Hex = humidity of the secondary air flow 14 at the outlet from the conditioning unit 11 toward the outside, measured by the fourth probe 22;

Q1 = flow-rate of the primary air flow 13, measured by the fifth probe 23;

Q2 = flow-rate of the secondary air flow 14, measured by the sixth probe 24.

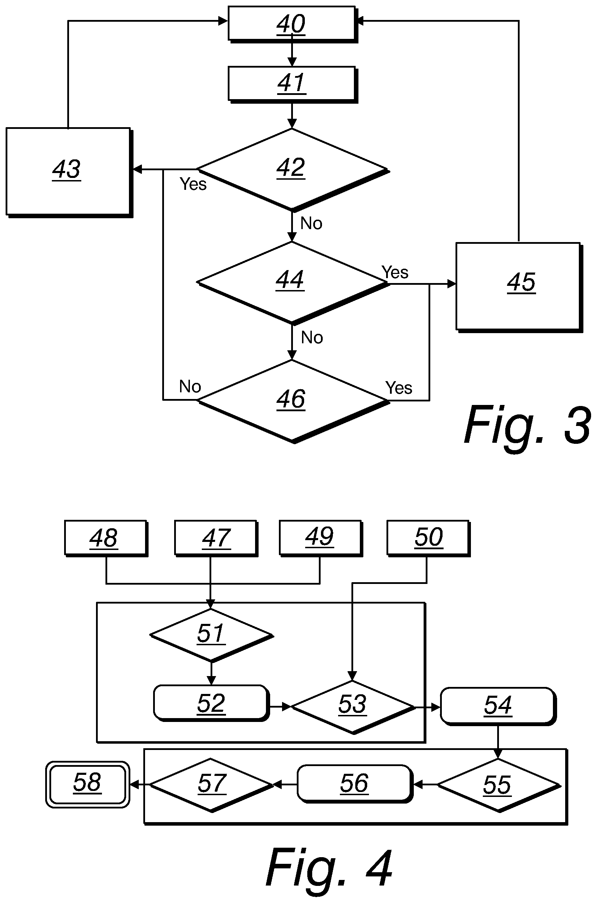

Such method of operation according to the invention is characterized in that it comprises the following operations, represented by the block diagram in Figure 3:

- starting the conditioning system 10 (block 40) and detecting, by way of the detection means, the values of temperature (Tamb, Tsupply, Tret, Tex), humidity (Hamb, Hsupply, Hret, Hex) and flow-rate (Q1 and Q2) of the primary air flow and secondary air flow,

- determining the cost of dry operation of the system (Cdry), i.e., without using water, and the cost of wet operation of the system (Cwet), i.e., using water (block 41);

- assessing whether the value of the temperature of the outside environment (Tamb) is lower than a preset temperature value, for example 18°C, and whether the value of the humidity of the outside environment (Hamb) is higher than a preset humidity value, for example 90% (block 42);

- if either Tamb is lower than the preset temperature value or Hamb is higher than the preset humidity value, then (block 43) switching off the evaporative cooling means 16 and the cooling means using water 31 for the secondary air flow 14 at the inlet, if they are present;

- if Tamb is not lower than the preset temperature value and Hamb is not higher than the preset humidity value, then checking whether the cost of dry operation of the system (Cdry) is greater than the cost of wet operation of the system (Cwet) (block 44);

- if Cdry is greater than Cwet, then switching on the evaporative cooling means 16 and/or the cooling means using water 31 (block 45);

- if Cdry is not higher than Cwet, then checking whether the temperature of the outside environment (Tamb) is higher than the return temperature (Tret) of the primary air flow 13 at the inlet to the conditioning unit 11 (block 46);

- if the temperature of the outside environment (Tamb) is higher than the return temperature (Tret) of the primary air flow 13 at the inlet to the conditioning unit 11, then switching on the evaporative cooling means 16 and/or the cooling means using water 31 for the secondary air flow 14 at the inlet (block 45);

- if the temperature of the outside environment (Tamb) is not higher than the return temperature (Tret) of the primary air flow 13 at the inlet to the conditioning unit 11, then switching off the evaporative cooling means 16 and/or the cooling means using water 31 for the secondary air flow 14 at the inlet (block 43).

Such cycle of operations is repeated iteratively.

The cost of dry operation of the system (Cdry) is a function of the estimated, or calculated, power (Pdry) absorbed by the fans 17 and 18 during the operation of the conditioning unit 11 without using water, i.e. with the evaporative means 16 and the cooling means 31 inactive.

The cost of wet operation of the system (Cwet) is a function of the estimated, or calculated, power (Pwet) absorbed by the fans 17 and 18 with the conditioning unit 11 operating using water, and of the consumption of water W.

In order to determine Pdry, we proceed with the following operations:

- establish a setpoint temperature Ts-p for the cool air introduced into the environment to be air-conditioned 15 (block 47);
- detect Tamb, Tret and Q1 (respectively blocks 48, 49 and 50);
- determine the ratio, in normal dry operation, between the primary air flow 13 and secondary air flow 14, Rdry, as a function of Tamb, Tret and Ts-p (block 51):

$$Rdry = f(Tamb, Tret, Ts\text{-}p)$$

- with the value of Rdry (block 52), determine Q2dry, i.e. the flow-rate of the secondary air flow 14 for dry operation (block 53), according to a function:

$$Q2dry = Rdry * Q1$$

- on the basis of Q2dry, the value indicated by block 54, determine the estimated speed S2dry for the second fans 18, according to a function, shown schematically by block 55, of the type:

$$S2dry = Cspeed1 * Q2dry + Cspeed2$$

such value shown schematically by block 56, with Cspeed1 and Cspeed2 which are coefficients obtained from the characteristics of the fans,

- on the basis of S2dry, determine (block 57) the estimated power absorbed (Pdry) of the first and second fans 17 and 18 under dry operation,

$$Pdry = Cpower1 * (S2dry)^{\wedge}Cpower2$$

such value shown schematically by block 58, with Cpower1 and Cpower2 which are also coefficients obtained from the characteristics of the fans.

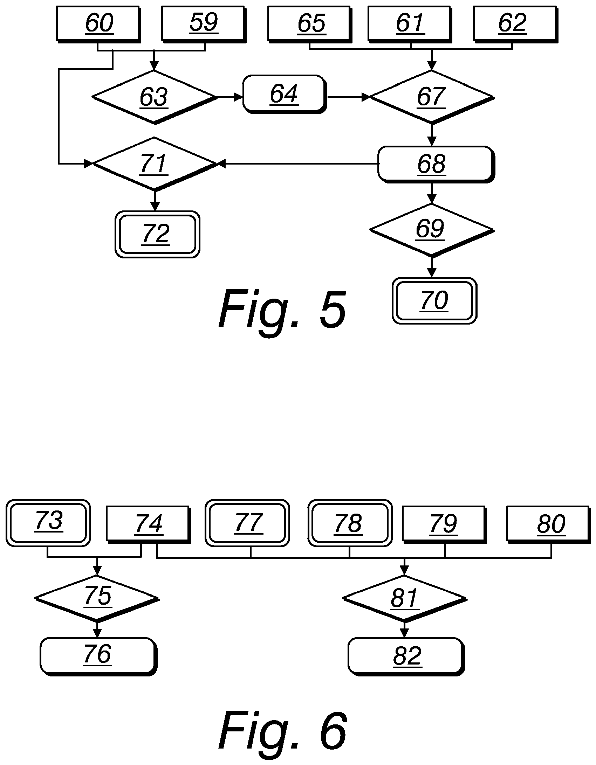

In order to determine Pwet, we proceed with the following operations, which are shown schematically in Figure 5:

- detect Tamb, Hamb, Tret and Q1 (respectively blocks 59, 60, 61 and 62);
- with Tamb and Hamb, determine the value of the adiabatic temperature (Tadiab) corresponding to 90% humidity (block 63):

$$Tadiab = CTA1 + CTA2*Tamb + CTA3*(Tamb)^{\wedge}2 + CTA4* (Tamb)^{\wedge}3$$

such value shown schematically by block 64, with CTA1, CTA2, CTA3 and CTA4 which are function coefficients of Hamb, obtained from the psychometric or Carrier chart.

- with Tadiab, Tret, delivery Ts-p (block 66), as established above, determine Rwet, the ratio, in normal wet operation of the conditioning unit 11, between the primary air flow 13 and secondary air flow 14 (block 67):

$$Rwet = f(Tadiab, Tret, Ts\text{-}p)$$

- with Rwet and Q1 (block 62), determine Q2wet, i.e. the estimated flow-rate of the secondary air flow 14 for wet operation of the unit 11 (block 68), according to a function:

$$Q2wet = Rwet * Q1$$

- on the basis of Q2wet, the value indicated by block 68, determine the estimated speed S2wet for the second fans 18, according to a function, shown schematically by block 69, of the type:

$$S2wet = Cspeed1 * Q2wet + Cspeed2$$

- on the basis of S2wet, determine (block 70) the estimated power absorbed (Pwet) of the first and second fans 17 and 18 under wet operation of the conditioning unit 11:

$$Pwet = Cpower1 * (S2wet)^{\wedge}Cpower2$$

- at the same time as Q2wet, Hamb and Tamb, determine the flow-rate of water W required for the wet operation of the conditioning unit 11, i.e. with the evaporative means using water 16 and the cooling means using water 31, for the secondary air flow 14, active (block 71):

$$W = (CW1 + CW2*Hamb + CW3*(Hamb^{\wedge}2) + CW4*(Hamb^{\wedge}3))*Q2wet + CW5$$

such value shown schematically with block 72, with the coefficients CW1, CW2, CW3, CW4, CW5 which are obtained from the consumption of water of the evaporative cooling means using water 16.

In order to determine Cdry and Cwet, we proceed with the following operations, which are shown schematically in Figure 6:

- determine Cdry by multiplying the calculated value of the power absorbed in dry operation (Pdry) by a factor Kp which consists of the cost of electricity (EUR/kW) (blocks 73 and 74):

$$Cdry = Kp * Pdry$$

with the operation shown schematically by block 75 and the resulting value of Pdry shown schematically by block 76;
- with the values of Kp, Pwet, W, Hamb and a factor Kw which consists of the cost of water (EUR/ (m^3/hr)) (respectively blocks 74, 77, 78, 79, 80), calculate Cwet (block 81):

$$Cwet = G*Kw*W + Kp*Pwet$$

such value shown schematically with block 82, with G which is a factor that depends on the outside humidity, the value of which is:

G = 0.5 for Hamb > 45%, high outside humidity and a single pump 29 of the evaporative cooling means using water 16 is in use;
G = 0.7 for 30% < Hamb $\leq$ 45%, average outside humidity and two pumps 29 and 30 of the evaporative cooling means using water 16 are in use;
G = 1.05 for Hamb ≤ 30%, low outside humidity, two pumps 29 and 30 of the evaporative cooling means using water 16 are in use and, if present, cooling means using water 31 for the secondary air flow 14 at the inlet are active.

If Cdry is greater than Cwet, then switch on the evaporative cooling means 16 and/or the cooling means using water 31, as in block 45.

If Cdry is not higher than Cwet, but the temperature of the outside environment (Tamb) is higher than the return temperature Tret of the primary air flow 13 at the inlet to the conditioning unit 11, switch on the evaporative cooling means 16 and/or the cooling means using water 31 for the secondary air flow 14 at the inlet.

If Hamb < 90% or Tamb > 18°C, the electronic control unit 25 is set to force the operation of the conditioning unit 11 in dry mode.

When the wet operating mode is selected, if Hamb > 45% only one pump 29 of the evaporative cooling means 16 is actuated; if Hamb ≤ 45% two pumps 29 and 30 of the evaporative cooling means 16 are actuated; if Hamb ≤ 30% two pumps 29 and 30 of the evaporative cooling means 16 are actuated and the cooling means using water 31 for the secondary air flow 14 at the inlet, if present, are active.

The invention also relates to an apparatus for carrying out a method of operation of the conditioning system described above.

Such apparatus is characterized in that it comprises:

-   means 19, 20, 21, 22, described above, for detecting temperature and humidity for the primary air flow 13 and the secondary air flow 14 at the inlet and at the outlet of a conditioning unit 11,
-   means described above 23, 24 for detecting the flow-rate of the primary air flow 13 and of the secondary air flow 14,
-   an electronic control and management unit 25 adapted to collect and process the data detected by the detection means 19, 20, 21, 22, 23, 24 and, on the basis of such detected data, adapted to determine, on the basis of the outside humidity and temperature values and of the demand for cooling, the operating cost without the use of water and with a variable use of water, and, on the basis of the operating cost, to activate a wet operating mode in which the evaporative cooling means using water 16 are active or a dry operating mode in which the evaporative cooling means using water 16 are inactive.

In practice it has been found that the invention fully achieves the intended aim and objects.

Such method of operation of the conditioning system according to the invention, once operational, on the basis of the readings of the detection means, is capable of predictively determining what the operating cost will be without the use of water and what the operating cost will be with variable use of water.

Selection of one or the other operating mode is made automatically by the electronic control unit 25 on the basis of an instant optimization of the costs Cdry and Cwet.

With the variation of the outside humidity and temperature and of the demand for cooling, the method of operation determines which is the most economic operating mode.

Such method of operation is as valid for systems with direct free cooling as for systems with indirect free cooling, like the one described above.

With the invention a conditioning system and a method for its operation are therefore provided which make possible a continuous optimization of the operating costs on the basis of the operating conditions.

In particular, with the invention a conditioning system and a method for its operation are provided which make it possible to vary the parameters constituted by the local costs of electricity and water if these should change, and to obtain a new optimized solution.

Moreover, with the invention a conditioning system and a method for its operation are provided which make it possible to set the automatic selection of the operating mode on the basis of two different costs of electricity, a nighttime rate and a daytime rate, so that the electronic control unit can re-parametrize the optimization on the basis of the time of day.

Furthermore, with the invention a conditioning system and a method for its operation are provided which make it possible to include in the cost not only the power absorbed by the fans and water, but also other, optional backup systems such as a cooling circuit or a refrigerated water system, and optimize the cost of the whole.

The invention, thus conceived, is susceptible of numerous modifications and variations, all of which are within the scope of the appended claims. Moreover, all the details may be substituted by other, technically equivalent elements.

In practice the components and the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1. A method of operation of a conditioning system (10) of the free cooling type for environments and particularly for computing centers, said conditioning system (10) comprising:

   - a conditioning unit of the free cooling type (11), which in turn comprises an air/air heat exchanger (12), inside which two air flows (13, 14) exchange heat, a primary air flow (13), from and toward an environment to be air-conditioned (15), and a secondary air flow (14), or process flow, drawn from outside, and evaporative cooling means using water (16),
   - first fans (17) for moving said primary air flow (13),
   - second fans (18) for moving said secondary air flow (14),

   said conditioning system comprising:

   - means (19, 20, 21, 22) for detecting temperature and humidity for the primary air flow (13) and the secondary air flow (14) at the inlet and at the outlet of said conditioning unit (11),
   - means (23, 24) for detecting the flow-rate of the primary air flow (13) and of the secondary air flow (14),
   - an electronic control and management unit (25) adapted to collect and process the data detected by said detection means (19, 20, 21, 22, 23, 24) and, on the basis of such detected data, adapted to determine, on the basis of the outside humidity and temperature values and of the demand for cooling, the operating cost without the use of water and with a variable use of water, and, on the basis of the operating cost, to activate a wet operating mode in which the evaporative cooling means using water (16) are active or a dry operating mode in which the evaporative cooling means using water (16) are inactive,

   the method being **characterized in that** it comprises:

   - starting the conditioning system (10) and detecting, by way of the detection means, the values of temperature (Tamb, Tsupply, Tret, Tex), humidity (Hamb, Hsupply, Hret, Hex) and flow-rate (Q1, Q2) of the primary air flow (13) and secondary air flow (14),
   - determining the cost of dry operation of the system (Cdry), i.e., without using water, and the cost of wet operation of the system (Cwet), i.e., using water;
   - assessing whether the value of the temperature of the outside environment (Tamb) is lower than a preset temperature value and whether the value of the humidity of the outside environment (Hamb) is higher than a preset humidity value;
   - if either the temperature of the outside environment (Tamb) is lower than the preset temperature value or the humidity of the outside environment (Hamb) is higher than the preset humidity value, then switching off the evaporative cooling means (16) and the cooling means using water (31) for the secondary air flow (14) at the inlet, if they are present,
   - if the temperature of the outside environment (Tamb) is not lower than the preset temperature value and the humidity of the outside environment (Hamb) is not higher than the preset humidity value, then checking whether the cost of dry operation of the system (Cdry) is greater than the cost of wet operation of the system (Cwet);
   - if the cost of dry operation of the system (Cdry) is higher than the cost of wet operation of the system (Cwet), then switching on the evaporative cooling means (16) and/or the cooling means using water (31), if present;
   - if the cost of dry operation of the system (Cdry) is not higher than the cost of wet operation of the system (Cwet), then checking whether the temperature of the outside environment (Tamb) is higher than the return temperature (Tret) of the primary air flow (13) at the inlet to the conditioning unit (11);
   - if the temperature of the outside environment (Tamb) is higher than the return temperature (Tret) of the primary air flow (13) at the inlet to the conditioning unit (11), then switching on the evaporative cooling means (16) and/or the cooling means using water (31) for the secondary air flow (14) at the inlet, if they are present;
   - if the temperature of the outside environment (Tamb) is not higher than the return temperature (Tret) of the primary air flow (13) at the inlet to the conditioning unit (11), then switching off the evaporative cooling means (16) and/or the cooling means using water (31) for the secondary air flow (14) at the inlet, if they are present,

2. The method of operation of the conditioning system according to claim 1, **characterized in that** said evaporative cooling means (16) comprise:

   - nozzles (27) for distributing cooling water within said air/air exchanger (12),
   - a tank (28) for collecting the water that has not evaporated,

- one or more recirculation pumps (29, 30) for drawing water from said collection tank (28) and sending it toward said nozzles (27).

3. The method of operation of the conditioning system according to one or more of the preceding claims, **characterized in that** said conditioning unit (11) comprises cooling means using water (31) for the secondary air flow (14) at the inlet of the conditioning unit (11).

4. The method of operation of the conditioning system according to one or more of the preceding claims, **characterized in that** said means for detecting the temperature and humidity for the primary air flow (13) at the inlet of the conditioning unit (11) are constituted by a first probe (19), which is arranged so as to intercept the primary air flow (13), which arrives from the environment to be air-conditioned (15), at an inlet region (37) of said conditioning unit (11).

5. The method of operation of the conditioning system according to one or more of the preceding claims, **characterized in that** said means for detecting the temperature and humidity for the primary air flow (13) at the outlet of the conditioning unit (11) have a second probe (20).

6. The method of operation of the conditioning system according to one or more of the preceding claims, **characterized in that** said means for detecting the temperature and humidity for the secondary air flow (14) at the inlet of the conditioning unit (11) are constituted by a third probe (21), which is arranged so as to intercept the secondary air flow (13), which arrives from the outside environment, at a corresponding inlet region (33) of the conditioning unit (11).

7. The method of operation of the conditioning system according to one or more of the preceding claims, **characterized in that** said means for detecting the temperature and humidity for the secondary air flow (14) at the outlet of the conditioning unit (11), at an outlet region (39) from the unit (11) toward the outside, have a fourth probe (22).

8. The method of operation of the conditioning system according to one or more of the preceding claims, **characterized in that** said means for detecting the flow-rate of the primary flow (13) are constituted by a fifth probe (23), which is arranged at the outlet region (38) from the conditioning unit (11) toward the environment to be air-conditioned (15).

9. The method of operation of the conditioning system according to one or more of the preceding claims, **characterized in that** said means for detecting the flow-rate of the secondary air flow (14) are constituted by a sixth probe (24), which is arranged at the outlet region (39) of the secondary air flow (14) from the conditioning unit (11) toward the outside.

10. The method of operation according to any one or more of the preceding claims, **characterized in that**:

- said cost of dry operation of the system (Cdry) is a function of the estimated power (Pdry) absorbed by the fans (17, 18) during the operation of the conditioning unit (11) without using water;
- said cost of wet operation of the system (Cwet) is a function of the estimated power (Pwet) absorbed by the fans (17, 18) with the conditioning unit (11) operating using water, and of the consumption of water (W),

**Patentansprüche**

1. Ein Verfahren zum Betreiben eines Klimaanlagensystems (10) vom Freikühlungstyp für Umgebungen und insbesondere für Rechenzentren, wobei das Klimaanlagensystem (10) Folgendes umfasst:

- eine Klimatisierungseinheit vom Freikühlungstyp (11), die wiederum einen Luft-/Luft-Wärme-Tauscher (12) umfasst, in dessen Innerem zwei Luftströme (13, 14) Wärme tauschen, ein primärer Luftstrom (13) von und zu einer zu klimatisierenden Umgebung (15) und ein sekundärer Luftstrom (14) oder Prozessstrom, der von außen angezogen wird, und Verdunstungskühlungsmittel, die Wasser nutzen (16),
- erste Ventilatoren (17) zum Bewegen des primären Luftstroms (13),
- zweite Ventilatoren (18) zum Bewegen des sekundären Luftstroms (14),

wobei das Klimaanlagensystem Folgendes umfasst:

- Mittel (19, 20, 21, 22) zum Erfassen der Temperatur und Feuchtigkeit des primären Luftstroms (13) und des sekundären Luftstroms (14) am Einlass und am Auslass der Klimatisierungseinheit (11),

- Mittel (23, 24) zum Erfassen der Strömungsgeschwindigkeit des primären Luftstroms (13) und des sekundären Luftstroms (14),
- eine elektronische Steuerungs- und Verwaltungseinheit (25), ausgebildet, um die Daten, die von den Erfassungsmitteln (19, 20, 21, 22, 23, 24) erfasst werden, zu sammeln und zu verarbeiten, und ausgebildet um, anhand dieser erfassten Daten, auf der Grundlage der Außenfeuchtigkeits- und -temperaturwerte und des Kühlungsbedarfs, die Betriebskosten ohne Verwendung von Wasser und mit variabler Nutzung von Wasser zu bestimmen, und auf der Grundlage der Betriebskosten einen Nassbetriebsmodus zu aktivieren, bei dem die Verdunstungskühlungsmittel (16), die Wasser nutzen, aktiv sind, oder einen Trockenbetriebsmodus, bei dem die Verdunstungskühlungsmittel (16), die Wasser nutzen, inaktiv sind;

wobei das Verfahren **dadurch gekennzeichnet ist, dass** es Folgendes umfasst:

- das Starten des Klimaanlagensystems (10) und das Erfassen, durch die Erfassungsmittel, der Werte der Temperatur (Tamb, Tsupply, Tret, Tex), Feuchtigkeit (Hamb, Hsupply, Hret, Hex) und Strömungsgeschwindigkeit (Q1, Q2) des primären Luftstroms (13) und des sekundären Luftstroms (14),
- das Bestimmen der Kosten des Trockenbetriebs des Systems (Cdry) (ohne Nutzung von Wasser) und der Kosten des Nassbetriebs des Systems (Cwet) (unter Nutzung von Wasser);
- das Bewerten, ob der Temperaturwert der äußeren Umgebung (Tamb) niedriger ist als ein voreingestellter Temperaturwert, und ob der Wert der Feuchtigkeit der äußeren Umgebung (Hamb) höher ist als ein voreingestellter Feuchtigkeitswert;
- wenn die Temperatur der äußeren Umgebung (Tamb) niedriger ist als der voreingestellte Temperaturwert oder die Feuchtigkeit der äußeren Umgebung (Hamb) höher ist als der voreingestellte Feuchtigkeitswert, das Ausschalten der Verdunstungskühlungsmittel (16) und der Kühlungsmittel (31), die Wasser für den sekundären Luftstrom (14) nutzen, am Einlass, falls vorhanden,
- wenn die Temperatur der äußeren Umgebung (Tamb) nicht niedriger ist als der voreingestellte Temperaturwert und die Feuchtigkeit der äußeren Umgebung (Hamb) nicht höher ist als der voreingestellte Feuchtigkeitswert, das Überprüfen, ob die Kosten des Trockenbetriebs des Systems (Cdry) höher sind als die Kosten des Nassbetriebs des Systems (Cwet);
- wenn die Kosten des Trockenbetriebs des Systems (Cdry) höher sind als die Kosten des Nassbetriebs des Systems (Cwet), das Einschalten der Verdunstungskühlungsmittel (16) und/oder der Kühlungsmittel (31), die Wasser nutzen, falls vorhanden;
- wenn die Kosten des Trockenbetriebs des Systems (Cdry) nicht höher sind als die Kosten des Nassbetriebs des Systems (Cwet), das Überprüfen, ob die Temperatur der äußeren Umgebung (Tamb) höher ist als die Rücklauftemperatur (Tret) des primären Luftstroms (13) am Einlass der Klimatisierungseinheit (11);
- wenn die Temperatur der äußeren Umgebung (Tamb) höher ist als die Rücklauftemperatur (Tret) des primären Luftstroms (13) am Einlass der Klimatisierungseinheit (11), das Einschalten der Verdunstungskühlungsmittel (16) und/oder der Kühlungsmittel (31), die Wasser für den sekundären Luftstrom (14) nutzen, am Einlass, falls vorhanden;
- wenn die Temperatur der äußeren Umgebung (Tamb) nicht höher ist als die Rücklauftemperatur (Tret) des primären Luftstroms (13) am Einlass der Klimatisierungseinheit (11), das Ausschalten der Verdunstungskühlungsmittel (16) und/oder der Kühlungsmittel (31), die Wasser für den sekundären Luftstrom (14) nutzen, am Einlass, falls vorhanden.

2. Das Verfahren zum Betreiben des Klimaanlagensystems gemäß Anspruch 1, **dadurch gekennzeichnet, dass** die Verdunstungskühlungsmittel (16) Folgendes umfassen:

- Düsen (27) zum Verteilen von Kühlwasser innerhalb des Luft/Luft-Tauschers (12),
- einen Tank (28) zum Sammeln des Wassers, das nicht verdunstet ist,
- eine oder mehrere Umlaufpumpen (29, 30) zum Ansaugen von Wasser aus dem Sammeltank (28) und zum Befördern desselben zu den Düsen (27).

3. Das Verfahren zum Betreiben des Klimaanlagensystems gemäß einem oder mehreren der obigen Ansprüche, **dadurch gekennzeichnet, dass** die Klimatisierungseinheit (11) Kühlungsmittel (31) umfasst, die Wasser für den sekundären Luftstrom (14) am Einlass der Klimatisierungseinheit (11) nutzen.

4. Das Verfahren zum Betreiben des Klimaanlagensystems gemäß einem oder mehreren der obigen Ansprüche, **dadurch gekennzeichnet, dass** die Mittel zur Erfassung der Temperatur und Feuchtigkeit des primären Luftstroms (13) am Einlass der Klimatisierungseinheit (11) in einer ersten Sonde (19) bestehen, die angeordnet ist, um den primären Luftstrom (13), der von der zu klimatisierenden Umgebung (15) kommt, an einem Einlassbereich (37) der Klimatisierungseinheit (11) abzufangen.

5. Das Verfahren zum Betreiben des Klimatisierungssystems gemäß einem oder mehreren der obigen Ansprüche, **dadurch gekennzeichnet, dass** die Mittel zur Erfassung der Temperatur und Feuchtigkeit des primären Luftstroms (13) am Auslass der Klimatisierungseinheit (11) eine zweite Sonde (20) haben.

6. Das Verfahren zum Betreiben des Klimatisierungssystems gemäß einem oder mehreren der obigen Ansprüche, **dadurch gekennzeichnet, dass** die Mittel zur Erfassung der Temperatur und Feuchtigkeit des sekundären Luftstroms (14) am Einlass der Klimatisierungseinheit (11) in einer dritten Sonde (21) bestehen, die angeordnet ist, um den sekundären Luftstrom (13), der von der äußeren Umgebung kommt, in einem entsprechenden Einlassbereich (33) der Klimatisierungseinheit (11) abzufangen.

7. Das Verfahren zum Betreiben des Klimatisierungssystems gemäß einem oder mehreren der obigen Ansprüche, **dadurch gekennzeichnet, dass** die Mittel zur Erfassung der Temperatur und Feuchtigkeit des sekundären Luftstroms (14) am Auslass der Klimatisierungseinheit (11), in einem Auslassbereich (39) von der Einheit (11) nach außen, eine vierte Sonde (22) haben.

8. Das Verfahren zum Betreiben des Klimatisierungssystems gemäß einem oder mehreren der obigen Ansprüche, **dadurch gekennzeichnet, dass** die Mittel zur Erfassung der Strömungsgeschwindigkeit des primären Stroms (13) in einer fünften Sonde (23) bestehen, die im Auslassbereich (38) von der Klimatisierungseinheit (11) zu der zu klimatisierenden Umgebung (15) hin positioniert ist.

9. Das Verfahren zum Betreiben des Klimatisierungssystems gemäß einem oder mehreren der obigen Ansprüche, **dadurch gekennzeichnet, dass** die Mittel zur Erfassung der Strömungsgeschwindigkeit des sekundären Luftstroms (14) in einer sechsten Sonde (24) bestehen, die im Auslassbereich (39) des sekundären Luftstroms (14) von der Klimatisierungseinheit (11) nach außen hin angeordnet ist.

10. Das Verfahren zum Betreiben gemäß einem beliebigen oder mehreren der obigen Ansprüche, **dadurch gekennzeichnet, dass**

- die Kosten des Trockenbetriebs des Systems (Cdry) eine Funktion der geschätzten Leistung (Pdry) sind, die von den Ventilatoren (17, 18) während des Betriebs der Klimatisierungseinheit (11) ohne Nutzung von Wasser aufgenommen wird;
- die Kosten des Nassbetriebs des Systems (Cwet) eine Funktion der geschätzten Leistung (Pwet), die von den Ventilatoren (17, 18) aufgenommen wird, wenn die Klimatisierungseinheit (11) unter Nutzung von Wasser arbeitet, und des Verbrauchs von Wasser (W) ist.

**Revendications**

1. Procédé de fonctionnement d'un système de conditionnement (10) du type à refroidissement libre pour des environnements et en particulier pour des centres de calcul, ledit système conditionnement (10) comportant :

- une unité de conditionnement du type à refroidissement libre (11), qui comporte à son tour un échangeur de chaleur air/air (12), à l'intérieur duquel deux flux d'air (13, 14) échangent de la chaleur, un flux d'air primaire (13), à partir d'un environnement à climatiser (15) et vers celui-ci, et un flux d'air secondaire (14), ou flux de traitement, aspiré depuis l'extérieur, et des moyens de refroidissement par évaporation utilisant de l'eau (16),
- des premiers ventilateurs (17) pour mettre en mouvement ledit flux d'air primaire (13),
- des seconds ventilateurs (18) pour mettre en mouvement ledit flux d'air secondaire (14),

ledit système de conditionnement comportant :

- des moyens (19, 20, 21, 22) pour détecter une température et une humidité pour le flux d'air primaire (13) et le flux d'air secondaire (14) à l'entrée et à la sortie de ladite unité de conditionnement (11),
- des moyens (23, 24) pour détecter le débit du flux d'air primaire (13) et du flux d'air secondaire (14),
- une unité de commande électronique et de gestion (25) adaptée pour collecter et traiter les données détectées par lesdits moyens de détection (19, 20, 21, 22, 23, 24) et, sur la base de telles données détectées, adaptée

**EP 3 037 738 B1**

pour déterminer, sur la base des valeurs d'humidité et de température extérieures et de la demande de refroidissement, le coût de fonctionnement sans utilisation d'eau et avec une utilisation variable d'eau, et, sur la base du coût de fonctionnement, pour activer un mode de fonctionnement humide dans lequel les moyens de refroidissement par évaporation utilisant de l'eau (16) sont actifs ou un mode de fonctionnement à sec dans lequel les moyens de refroidissement par évaporation utilisant de l'eau (16) sont inactifs,

le procédé étant **caractérisé en ce qu'**il comporte les étapes consistant à :

- démarrer le système de conditionnement (10) et détecter, au moyen des moyens de détection, les valeurs de température (Tamb, Tsupply, Tret, Tex), d'humidité (Hamb, Hsupply, Hret, Hex) et de débit (Q1, Q2) du flux d'air primaire (13) et du flux d'air secondaire (14),
- déterminer le coût de fonctionnement à sec du système (Cdry), c'est-à-dire sans utiliser d'eau, et le fonctionnement humide du système (Cwet), c'est-à-dire en utilisant de l'eau,
- évaluer si la valeur de la température de l'environnement extérieur (Tamb) est inférieure à une valeur de température préétablie et si la valeur de l'humidité de l'environnement extérieur (Hamb) est supérieure à une valeur d'humidité préétablie,
- si soit la température de l'environnement extérieur (Tamb) est inférieure à la valeur de température préétablie soit l'humidité de l'environnement extérieur (Hamb) est supérieure à la valeur d'humidité préétablie, alors arrêter les moyens de refroidissement par évaporation (16) et les moyens de refroidissement utilisant de l'eau (31) pour le flux d'air secondaire (14) à l'entrée, s'ils sont présents,
- si la température de l'environnement extérieur (Tamb) n'est pas inférieure à la valeur de température préétablie et l'humidité de l'environnement extérieur (Hamb) n'est pas supérieure à la valeur d'humidité préétablie, alors vérifier si le coût de fonctionnement à sec du système (Cdry) est supérieur au coût de fonctionnement humide du système (Cwet),
- si le coût de fonctionnement à sec du système (Cdry) est supérieur au coût de fonctionnement humide du système (Cwet), alors mettre en marche les moyens de refroidissement par évaporation (16) et/ou les moyens de refroidissement utilisant de l'eau (31), s'ils sont présents,
- si le coût de fonctionnement à sec du système (Cdry) n'est pas supérieur au coût de fonctionnement humide du système (Cwet), alors vérifier si la température de l'environnement extérieur (Tamb) est supérieure à la température de retour (Tret) du flux d'air primaire (13) à l'entrée de l'unité de conditionnement (11),
- si la température de l'environnement extérieur (Tamb) est supérieure à la température de retour (Tret) du flux d'air primaire (13) à l'entrée de l'unité de conditionnement (11), alors mettre en marche les moyens de refroidissement par évaporation (16) et/ou les moyens de refroidissement utilisant de l'eau (31) pour le flux d'air secondaire (14) à l'entrée, s'ils sont présents,
- si la température de l'environnement extérieur (Tamb) n'est pas supérieure à la température de retour (Tret) du flux d'air primaire (13) à l'entrée de l'unité de conditionnement (11), alors mettre hors tension les moyens de refroidissement par évaporation (16) et/ou les moyens de refroidissement utilisant de l'eau (31) pour le flux d'air secondaire (14) à l'entrée, s'ils sont présents.

2. Procédé de fonctionnement du système de conditionnement selon la revendication 1, **caractérisé en ce que** lesdits moyens de refroidissement par évaporation (16) comportent :

- des buses (27) pour distribuer de l'eau de refroidissement à l'intérieur dudit échangeur air/air (12),
- un réservoir (28) pour recueillir l'eau qui ne s'est pas évaporée,
- une ou plusieurs pompes de recirculation (29, 30) pour aspirer de l'eau à partir dudit réservoir de collecte (28) et l'envoyer vers lesdites buses (27).

3. Procédé de fonctionnement du système de conditionnement selon une ou plusieurs des revendications précédentes, **caractérisé en ce que** ladite unité de conditionnement (11) comporte des moyens de refroidissement utilisant de l'eau (31) pour le flux d'air secondaire (14) à l'entrée de l'unité de conditionnement (11).

4. Procédé de fonctionnement du système de conditionnement selon une ou plusieurs des revendications précédentes, **caractérisé en ce que** lesdits moyens pour détecter la température et l'humidité du flux d'air primaire (13) à l'entrée de l'unité de conditionnement (11) sont constitués d'une première sonde (19), qui est agencée de manière à intercepter le flux d'air primaire (13), qui arrive de l'environnement à climatiser (15), au niveau d'une zone d'entrée (37) de ladite unité de conditionnement (11) .

5. Procédé de fonctionnement du système de conditionnement selon une ou plusieurs des revendications précédentes, **caractérisé en ce que** lesdits moyens pour détecter la température et l'humidité pour le flux d'air primaire (13) à la sortie de l'unité de conditionnement (11) ont une deuxième sonde (20).

6. Procédé de fonctionnement du système de conditionnement selon une ou plusieurs des revendications précédentes, **caractérisé en ce que** lesdits moyens pour détecter la température et l'humidité pour le flux d'air secondaire (14) à l'entrée de l'unité de conditionnement (11) sont constitués d'une troisième sonde (21), qui est agencée de manière à intercepter le flux d'air secondaire (13), qui arrive de l'environnement extérieur, au niveau d'une zone d'entrée (33) correspondante de l'unité de conditionnement (11).

7. Procédé de fonctionnement du système de conditionnement selon une ou plusieurs des revendications précédentes, **caractérisé en ce que** lesdits moyens pour détecter la température et l'humidité pour le flux d'air secondaire (14) à la sortie de l'unité de conditionnement (11), au niveau d'une zone de sortie (39) depuis l'unité (11) vers l'extérieur, ont une quatrième sonde (22).

8. Procédé de fonctionnement du système de conditionnement selon une ou plusieurs des revendications précédentes, **caractérisé en ce que** lesdits moyens pour détecter le débit du flux primaire (13) sont constitués d'une cinquième sonde (23), qui est agencée au niveau de la zone de sortie (38) depuis l'unité de conditionnement (11) vers l'environnement à climatiser (15).

9. Procédé de fonctionnement du système de conditionnement selon une ou plusieurs des revendications précédentes, **caractérisé en ce que** lesdits moyens pour détecter le débit du flux d'air secondaire (14) sont constitués d'une sixième sonde (24), qui est agencée au niveau de la zone de sortie (39) du flux d'air secondaire (14) depuis l'unité de conditionnement (11) vers l'extérieur.

10. Procédé de fonctionnement selon l'une quelconque ou plusieurs des revendications précédentes, **caractérisé en ce que** :

    - ledit coût de fonctionnement à sec du système (Cdry) est fonction de la puissance estimée (Pdry) absorbée par les ventilateurs (17, 18) pendant le fonctionnement de l'unité de conditionnement (11) sans utiliser d'eau,
    - ledit coût de fonctionnement humide du système (Cwet) est fonction de la puissance estimée (Pwet) absorbée par les ventilateurs (17, 18) avec l'unité de conditionnement (11) fonctionnant en utilisant de l'eau, et de la consommation d'eau (W).

10

25

18  14  11

13

15

16

13

17  26  12  36

14

# Fig. 1

Fig. 2

EP 3 037 738 B1

Fig. 3

Fig. 4

| 60 | 59 | | 65 | 61 | 62 |

63 → 64 → 67

71 ← 68

72

68 → 69

70

# Fig. 5

| 73 | 74 | 77 | 78 | 79 | 80 |

75

81

76

82

# Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008000630 A
- US 8151578 B1